# EUROPÄISCHE PATENTANMELDUNG

(11) **EP 3 553 922 A1**
(43) Veröffentlichungstag der Anmeldung: **16.10.2019**
(21) Anmeldenummer: 18166230.5
(22) Anmeldetag: 09.04.2018
(51) Int. Cl.: H02K 5/02, H02K 5/06, H02K 5/20, H02K 5/22

(54) **GEHÄUSEANORDNUNG FÜR EINE ELEKTRISCHE MASCHINE MIT EINEM MANTEL AUS KUNSTSTOFF**

(71) Anmelder: Carl Freudenberg KG, 69469 Weinheim (DE)
(72) Erfinder: STEPHAN, Ingo, 64668 Rimbach (DE); KRITZER, Peter, Dr., 67147 Forst (DE); MILCH, Michael, 64658 Fürth (DE)

(57) **Zusammenfassung**

Die Erfindung betrifft eine Gehäuseanordnung (10) für eine elektrische Maschine (20), insbesondere einen Elektromotor und/oder einen Generator, aufweisend einen inneren (2) und einen äußeren Mantel (1) und mindestens einen dazwischenliegenden mit Kühlflüssigkeit durchströmten Kühlkanal (3) zum Kühlen der elektrischen Maschine. Erfindungsgemäß sind der innere Mantel (2) aus Metall, insbesondere aus Aluminiumdruckguß, und der äußere Mantel (1) aus Kunststoff ausgebildet. Bevorzugt werden strömungsführende Strukturen (4) des Kühlkanals (3) durch erste integrierte Dichtungselemente (5.1) gebildet. In vorteilhafter Weise wird so die Montage der Gehäuseanordnung (10) vereinfacht und das Temperaturmanagement der elektrischen Maschine (20) verbessert.

## Beschreibung

Die Erfindung betrifft eine Gehäuseanordnung für eine elektrische Maschine, insbesondere einen Elektromotor und/oder einen Generator gemäß dem Oberbegriff von Anspruch 1.

### Stand der Technik

Unter einer elektrischen Maschine wird ein elektromechanische Wandler verstanden, der elektrische Energie in mechanische Energie und/oder mechanische Energie in elektrische Energie umwandelt. Insbesondere handelt es sich bei der elektrischen Maschine um einen Elektromotor und/oder um einen Generator.

Bei der Verwendung der elektrischen Maschine im Kraftfahrzeugbereich, beispielsweise als Fahrmotor bzw. Antriebsmotor und/oder als Generator, zum Beispiel als Lichtmaschine, kann die elektrische Maschine statorseitig in einem Gehäuse angeordnet werden.

Aufgrund von hohen Leistungen und begrenztem Bauraum treten hohe Leistungsdichten auf, so dass eine aktive Kühlung der elektrischen Maschine erforderlich ist. Die Kühlung erfolgt meistens mittels eines den Stator umgebenden Kühlmantels zur Flüssigkühlung. Dazu ist in der Gehäuseanordnung der elektrischen Maschine ein Kühlkanal vorgesehen, welcher Kühlflüssigkeit transportiert.

Eine solche Gehäuseanordnung für eine elektrische Maschine ist beispielsweise in der DE 10 2015 221 777 A1 beschrieben. Eine andere Gehäuseanordnung für eine flüssigkeitsgekühlte elektrische Maschine geht aus der DE 10 2009 031 727 A1 und der DE 10 2005 052 363 A1 hervor.

In gängigen Ausführungen gemäß dem Stand der Technik ist ein innerer Mantel der Gehäuseanordnung mit Kühlrippen versehen, wobei sowohl innerer Mantel als auch äußere Mantel der Gehäuseanordnung einen Spalt bilden. Die Kühlrippen können einen spiralförmigen oder mäanderförmigen Kühlkanal ausbilden. Die Gehäuseanordnung kann im Aluminiumdruckgussverfahren hergestellt werden Nachteilig an diesen Lösungen ist zum einen der hohe fertigungstechnische Aufwand der Kühlrippen und das hohe Gewicht. Nachteilig ist zum anderen, dass aufgrund von Fertigungstoleranzen und des zur Montage notwendigen Fügespiels Spalte zwischen den Strukturen der Kühlrippen und der Innenfläche des äußeren Mantels erforderlich sind. Diese Spalte führen zu Querströmungen der Kühlflüssigkeit, damit zu Strömungsverlusten und auch einer ungewollten Wärmeübertragung zwischen den einzelnen Abschnitten des Kühlkanals. Diese Verluste müssen durch eine höhere Pumpleistung der Kühlmittelpumpe ausgeglichen werden. Weiter nachteilig ist, dass über den äußeren metallenen Mantel der Gehäuseanordnung Wärme an umgebende Bauteile abgestrahlt wird, was diesen Bauteilen schadet oder sie zumindest negativ beeinflussen kann. Auch kann diese Strahlungswärme nicht mehr gezielt genutzt werden, zum Beispiel für die Heizung des Fahrgastraumes, der Batterie, etc. Ein weiterer Nachteil besteht in der aufwändige Montage der Gehäuseanordnung. Zur Abdichtung des Kühlkanals müssen bei der Montage Dichtungen, wie z.B. Flachdichtungen oder O-Ringe eingelegt oder pastöse, aushärtende Dichtmasse aufgetragen werden. Diese Dichtungen dürfen bei der Montage nicht zerstört werden, was hohe Anforderungen an die Montagearbeiter stellt.

### Aufgabenstellung

Aufgabe der vorliegenden Erfindung ist es eine Gehäuseanordnung für eine elektrische Maschine zu schaffen, die gegenüber dem Stand der Technik einfacher in der Montage ist und ein verbessertes Temperaturmanagement der elektrischen Maschine ermöglicht.

### Technische Lösung

Gelöst wird diese Aufgabe durch eine Gehäuseanordnung mit den Merkmalen von Anspruch 1.

Die erfindungsgemäße Gehäuseanordnung für eine elektrische Maschine, insbesondere einen Elektromotor und/oder einen Generator, weist einen inneren und einen äußeren zylinderförmigen Mantel und mindestens einen in dem Spalt dazwischenliegenden Kühlkanal zum Kühlen der elektrischen Maschine auf. Unter dem Begriff Kühlkanal wird hier sowohl ein Volumen oder auch mehrere Volumina verstanden, welche sich über den Spalt verteilen. In vorteilhafter Weise ist der innere Mantel aus Metall, insbesondere aus Aluminiumdruckguss, und der äußere Mantel aus Kunststoff, insbesondere einem polymeren Kunststoff. Der Kühlkanal ist zum Transport einer Kühlflüssigkeit, zum Beispiel einer Wasserglykolmischung, eines Öls oder einer organischen Flüssigkeit ausgebildet.

Eine derartige Gehäuseanordnung hat den Vorteil, dass ein effektives Wärmemanagement, d. h. eine gezielte Kühlung, bei einer gleichzeitig realisierten Gewichtsersparnis für die Gehäuseanordnung, möglich wird. Dank der Verwendung des Materials Kunststoff für den äußeren Mantel der Gehäuseanordnung kann die Wärmeübertragung durch die Gehäuseanordnung und damit die Wärmestrahlung auf angrenzende Bauteile reduziert werden. Bei Einsatz eines speziell wärmedämmenden Kunststoffs kann diese vorteilhafte Eigenschaft weiter verstärkt werden. Da der innere Mantel der Gehäuseanordnung weiterhin aus einem Metall besteht, ist eine gute Wärmeübertragung von der elektrischen Maschine, beispielsweise von ihrem Stator auf die Kühlflüssigkeit, sichergestellt. Es wurde dabei als vorteilhaft erkannt, den äußeren Mantel aus einem polymeren Werkstoff zu fertigen, insbesondere aus einem Thermoplast, einem Duroplast oder einem polymerbasierten Faserverbundwerkstoff.

In vorteilhafter Weiterbildung der erfindungsgemäßen Gehäuseanordnung besitzt deren innerer Mantel eine ebene, unstrukturierte Außenfläche, d. h. der innere Mantel ist nicht mit Kühlrippen versehen. Damit kann der innere Mantel einfacher und kostengünstiger gefertigt werden.

In einer besonders vorteilhaften und daher bevorzugten Weiterbildung der erfindungsgemäßen Gehäuseanordnung ist der äußere Mantel an seiner Innenfläche mit den Kühlkanal bildenden strömungsführenden Strukturen versehen, wobei die Strukturen als Kanäle, Stege oder Dichtlippen ausgeführt sein können. Als vorteilhaft wurde es erkannt, die strömungsführenden Strukturen als spiralförmigen Steg, d. h. als schraubenförmigen Steg, welcher einen schraubenförmigen Vorsprung auf der inneren Mantelfläche bildet, als mäanderförmiger, schlangenförmiger oder axialer Kanal auszubilden. Die strömungsführenden Strukturen können dabei entweder einen über die Erstreckung des Mantels konstanten Querschnitt oder auch einen variierenden Querschnitt aufweisen, zum Beispiel kann die Breite und Tiefe des Kühlkanals variieren. So lässt sich das Design des Kühlkanals an die thermischen Erfordernisse optimal anpassen, zum Beispiel können am Kühlmittelzulauf tiefe und breite Kanäle und am Kühlmittelablauf Kanäle mit einem geringeren Querschnitt vorgesehen sein.

In einer besonders vorteilhaften und dabei bevorzugten Ausführung der Gehäuseanordnung sind in den äußeren Mantel mehrere Dichtungselemente aus einem elastischen Werkstoff integriert, zum Beispiel aus einem auf die Kühlflüssigkeit abgestimmten Elastomer, insbesondere aus einem thermoplastischen Elastomer (TPE), einem Fluorcarbon-Kautschuk (FKM), einem hydrierten Acrylnitrilbutadien-Kautschuk (HNBA), einem Moosgummi oder einem Silikon. Eine erste Gruppe von Dichtungselementen dieser mehreren integrierten Dichtungselemente dichten den inneren Mantel gegen den Kühlkanal ab. Besonders bevorzugt ist, wenn die strömungsführenden Strukturen zumindest teilweise durch diesen elastischen Werkstoff gebildet werden. Die Dicke der ersten Dichtungselemente ist dabei so gewählt, dass diese bei Montage des äußeren Mantels auf den inneren Mantel eine Verpressung erfahren. Der Kühlkanal wird so gut abgedichet, Querströmungen und Rückvermischungen der Kühlflüssigkeit können effektiv verhindert und die Kühlleistung verbessert werden. Auch wird durch das Vorsehen der integrierten Dichtungselemente der Montagevorgang der Gehäuseanordnung stark vereinfacht.

In einer Ausführungsvariante der Gehäuseanordnung ist der äußere Mantel aus mindestens zwei Segmenten aufgebaut, wobei es sich bei den Segmenten um Teilschalen, insbesondere um Halbschalen handelt. Die Segmente weisen dabei insbesondere eine gleiche, d. h. identische Grundform auf und können klappbar miteinander verbunden sein. Dazu kann ein die Segmente verbindendes Scharnier vorgesehen sein. Dank der Segmentierung des äußeren Mantels kann die Montage der Gehäuseanordnung weiter vereinfacht werden.

Als besonders vorteilhaft wird es angesehen, wenn die Segmente ineinander einrasten, d. h. durch Verrasten bzw. Verklipsen miteinander verbunden werden, mittels Spannelementen miteinander verspannt werden oder miteinander verschraubt sind.

In einer Weiterbildung kann die Gehäuseanordnung mit einer elektrisch leitfähigen Beschichtung versehen sein zur Verbesserung der elektromagnetischen Verträglichkeit (EMV).. Diese Beschichtung kann insbesondere eine Metallbeschichtung oder eine Beschichtung mit Kohlenstoff sein. Die Schichtbildung kann dabei z.B. durch galvanische Abscheidung, Plasma-Verfahren (PVD) oder chemischer Gasphasenabscheidung (CVD) erfolgen.

In einer Weiterbildung kann die Gehäuseanordnung zur Verbesserung der elektromagnetischen Verträglichkeit (EMV) mit Intrinsical conductive Polymers (ICPs), mit Conductive Plastic Compounds oder mit Overmolding of conductive Inserts versehen sein.

In einer vorteilhaften Ausführungsform können in den äußeren Mantel in Sensordurchführungen, d. h. in Löchern in dem Mantel, Sensorelemente integriert sein, zum Beispiel zur Bestimmung von Temperatur, Druck, Strömung und/oder Füllstand in dem Kühlkanal.

In Weiterbildung der zuvor beschriebenen Gehäuseanordnung können in den äußeren Mantel weitere Dichtungselemente integriert sein:
- Dabei kann es sich um zweite Dichtungselemente zur Abdichtung von einem Einlass und einem Auslass des Kühlkanals handeln.
- Auch kann es sich um dritte Dichtungselemente zur Abdichtung der Segmente zueinander und/oder zur Abdichtung des Spalts zwischen innerem und äußerem Mantel im Bereich der Grundflächen des Mantels handeln, d. h. um den Kühlkanal beidseitig abzuschließen.
- Auch kann es sich um vierte Dichtungselemente zur Abdichtung von Sensordurchführungen handeln.

Diese Weiterbildungen haben den Vorteil, dass keine Dichtungen mehr eingelegt oder Dichtmassen mehr aufgetragen werden müssen, was in Montageerleichterungen und einer höheren Montagesicherheit resultiert.

Als vorteilhaft wurde es erkannt, den äußeren Mantel, die strömungsführenden Strukturen und die integrierten Dichtungselemente in einem Prozessschritt im 2-K-Verfahren, also im 2-Komponenten-Spritzgussverfahren, herzustellen. Damit wird eine hohe Produktivität in der Herstellung des äußeren Mantels erreicht, wobei gleichzeitig eine richtige Positionierung der integrierten Dichtungselemente sichergestellt wird.

In einer möglichen Weiterbildung ist der äußere Mantel der Gehäuseanordnung zur Aufnahme mindestens eines zusätzlichen Aggregats, zum Beispiels eines Getriebes oder einer Leistungselektronik, wie z.B. eines Inverters, ausgeführt. Dies kann erreicht werden, zum Beispiel durch Vorsehen von Gehäuseerweiterungen. Diese können ebenfalls in dem einem Prozessschritt im 2-K-Verfahren hergestellt werden. Auch kann dem zusätzlichen Aggregat ein mit Kühlflüssigkeit betriebenes Kühlelement zugeordnet sein, wobei der Kühlkanal und dieses Kühlelement Teile eines einzigen Kühlsystems sind. Das vorhandene Kühlsystem und das Temperaturmanagement der elektrischen Maschine kann so vorteilhaft für das mindestens eine zusätzliche Aggregat mitbenutzt werden und es müssen keine separaten Kühlsysteme vorgesehen werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine erfindungsgemäße Gehäuseanordnung in einer räumlichen Ansicht
- Fig. 2a: eine Schnittansicht der Gehäuseanordnung aus Fig. 1
- Fig. 2b: ein unteres Segment der Gehäuseanordnung aus Fig. 1
- Fig. 2c: ein oberes Segment der Gehäuseanordnung aus Fig. 1
- Fig. 3a: eine erste Variante von strömungsführenden Strukturen
- Fig. 3b: eine zweite Variante von strömungsführenden Strukturen
- Fig. 3c: eine dritte Variante von strömungsführenden Strukturen
- Fig. 3d: eine vierte Variante von strömungsführenden Strukturen
- Fig. 4a: eine erste Ausführungsform zur Verbindung der strömungsführenden Strukturen mit dem äußeren Mantel der Gehäuseanordnung
- Fig. 4b: eine zweite Ausführungsform zur Verbindung der strömungsführenden Strukturen mit dem äußeren Mantel der Gehäuseanordnung
- Fig. 4c: eine dritte Ausführungsform zur Verbindung der strömungsführenden Strukturen mit dem äußeren Mantel der Gehäuseanordnung
- Fig. 4d: eine vierte Ausführungsform zur Verbindung der strömungsführenden Strukturen mit dem äußeren Mantel der Gehäuseanordnung
- Fig. 5a: eine Gehäuseanordnung mit zwei Segmenten
- Fig. 5b: eine Gehäuseanordnung mit vier Segmenten
- Fig. 6: einen in den äußeren Mantel der Gehäuseanordnung integrierten Sensor
- Fig. 7: eine Erweiterung der Gehäuseanordnung zur Aufnahme eines zusätzlichen Aggregats

Die Erfindung betrifft eine Gehäuseanordnung 10 für eine elektrische Maschine 20, insbesondere einen Elektromotor und/oder einen Generator, aufweisend einen inneren 2 und einen äußeren Mantel 1 und mindestens einen dazwischenliegenden mit Kühlflüssigkeit durchströmten Kühlkanal 3 zum Kühlen der elektrischen Maschine. Erfindungsgemäß sind der innere Mantel 2 aus Metall, insbesondere aus Aluminiumdruckguß, und der äußere Mantel 1 aus Kunststoff ausgebildet. Bevorzugt werden strömungsführende Strukturen 4 des Kühlkanals 3 durch erste integrierte Dichtungselemente 5.1 gebildet. In vorteilhafter Weise wird so die Montage der Gehäuseanordnung 10 vereinfacht und das Temperaturmanagement der elektrischen Maschine 20 verbessert.

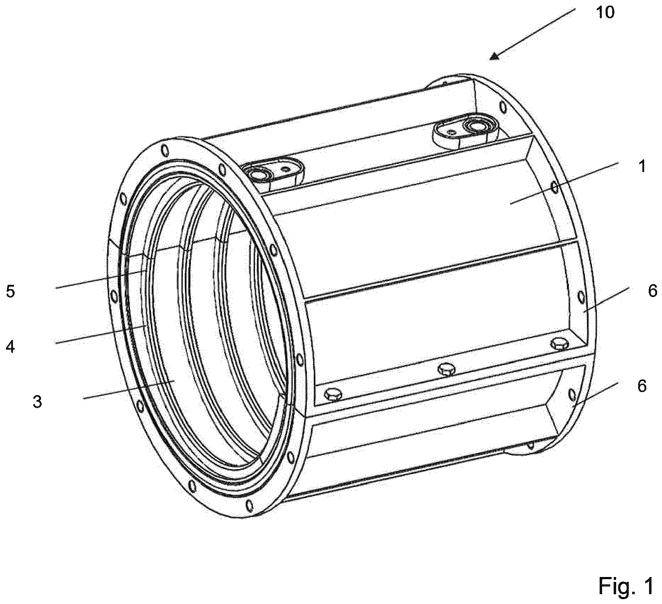

In Fig. 1 ist eine erfindungsgemäße Gehäuseanordnung 10 dargestellt, welche eine elektrische Maschine, wie z. B. einen Elektromotor und / oder einen Generator, ummantelt. Die Gehäuseanordnung 10 weist dazu einen äußeren Mantel 1 auf, sowie einen inneren Mantel 2, welcher direkt an die elektrische Maschine angrenzt, jedoch in Fig. 1 nicht dargestellt ist. Aus Fig. 1 geht nur der Aufbau des äußeren Mantels 1 hervor. Der äußere Mantel 1 ist dabei aus zwei Segmenten 6 zusammengesetzt, welche miteinander verschraubt sind. Auf der Innenfläche des äußeren Mantels 1 sind einen Kühlkanal 3 bildende strömungsführende Strukturen 4 angeordnet. Auf den strömungsführenden Strukturen 4 ist ein integriertes Dichtungselement 5 angebracht. Aufgabe des integrierten Dichtungselements 5 ist es, den Kühlkanal 3 gegenüber dem inneren Mantel 2 (nicht dargestellt) abzudichten.

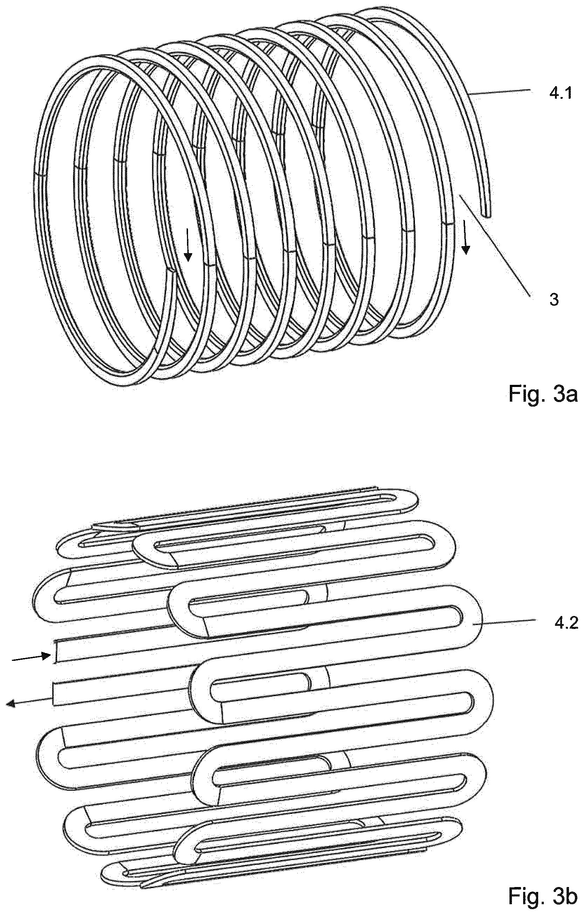

Der Kühlkanal 3 hat einen spiralförmigen Aufbau, welcher in Fig. 3a noch näher dargestellt wird.

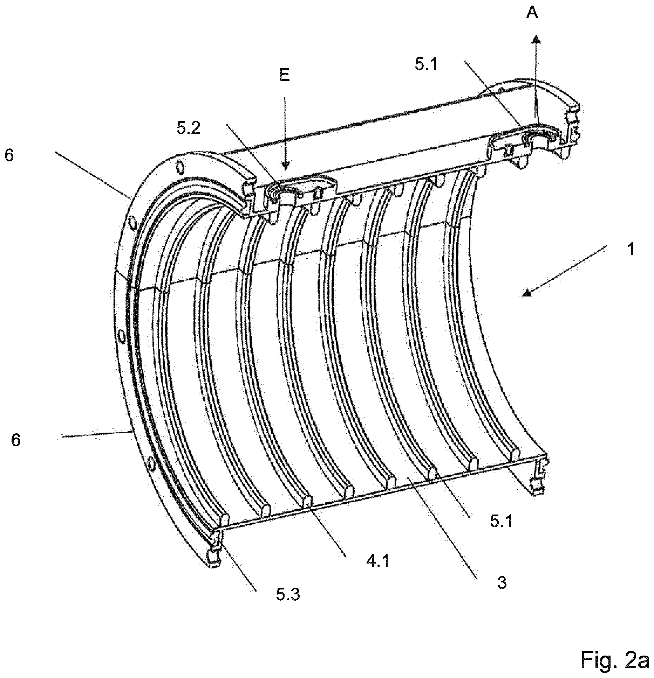

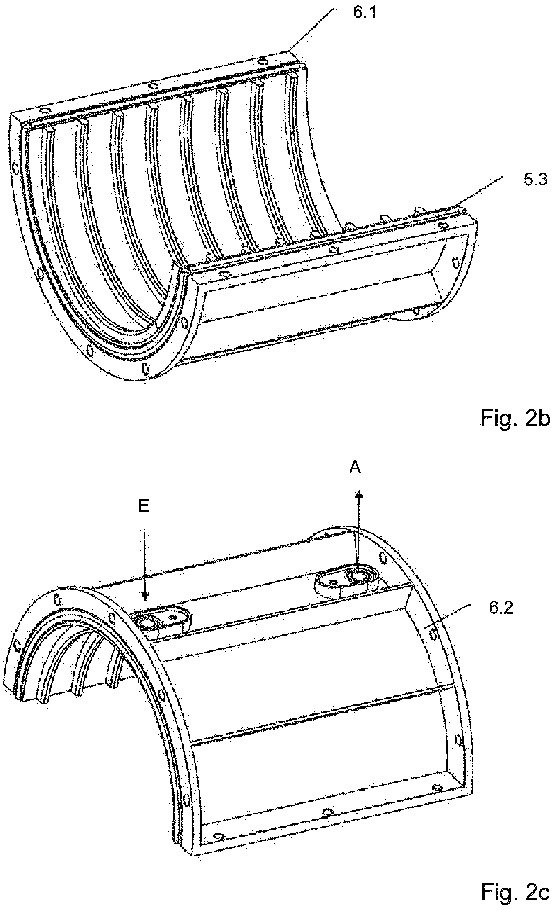

Wie sich aus der Schnittdarstellung von Fig. 2a ergibt, besitzt der Kühlkanal 3 einen Auslass A sowie einen Einlass E, durch welche eine Kühlflüssigkeit ab- bzw. zugeführt werden kann. Im Bereich von Auslass A und Einlass E des Kühlkanals 3 sind zweite Dichtungselemente 5.2 vorgesehen, welche zur Abdichtung von Einlass E und Auslass A des Kühlkanals 3 dienen. Neben den bereits obenstehend erwähnten ersten Dichtungselementen 5.1, welche eine Abdichtung des Kühlkanals 3 gegenüber dem inneren Mantel 2 bewirken, sind auch noch dritte Dichtungselemente 5.3 vorgesehen, welche der Abdichtung des Spalts zwischen innerem und äußerem Mantel 1, 2 im Bereich der Grundflächen der Mäntel 1 , 2 dienen. Weitere dritte Dichtungselemente 5.3, welche zur Abdichtung der Segmente 6 zueinander dienen, sind in Fig. 2b dargestellt. Die beiden Segmente 6, aus welchen der äußere Mantel 1 zusammengesetzt wird, sind in den Fig. 2b und 2c dargestellt. Bei den Segmenten 6 handelt es sich um zwei Halbschalen 6.1 und 6.2 von grundsätzlich identischem Aufbau. In der oberen Halbschale 6.2 sind jedoch der Auslass A und der Einlass E des Kühlkanals 3 vorgesehen.

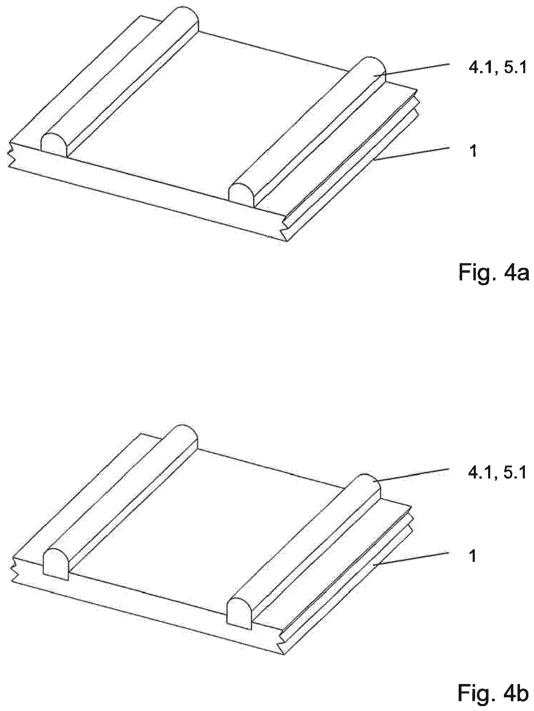

Die Segmente 6 können im Zweikomponenten-Spritzgussverfahren hergestellt sein. Dabei werden die strömungsführenden Strukturen 4 und die integrierten Dichtungselemente 5 in einem Prozessschritt gemeinsam mit dem äußeren Mantel 1 und integriert in den äußeren Mantel 1 hergestellt. Der äußere Mantel 1 kann dabei aus einem polymeren Werkstoff sein, z. B. aus einem Thermoplast. Die integrierten Dichtungselemente 5 können aus einem Elastomer gefertigt sein. Um den Fertigungsprozess zu vereinfachen, können die strömungsführenden Strukturen 4 durch die integrierten Dichtungselemente 5.1 gebildet werden. Eine mögliche Verbindung der strömungsführenden Strukturen 4 mit dem äußeren Mantel 1 wird später anhand der Fig. 4a bis 4d weiter ausgeführt.

In den Fig. 3a bis 3d sind unterschiedliche Varianten zur Ausbildung des Kühlkanals 3 gezeigt. In allen Fällen wird der Kühlkanal 3 durch strömungsführende Strukturen 4 gebildet, welche sich in dem Spalt zwischen äußerem Mantel 1 und innerem Mantel 2 befinden. Aus Fig. 3a geht ein spiralförmiger, das heißt schraubenförmiger Kühlkanal 3 hervor. Der Kühlkanal 3 wird dabei durch einen spiralförmigen Steg 4.1 ausgebildet. Wird der schraubenförmige Steg 4.1 auf die Innenfläche des äußeren Mantels 1 aufgebracht, so bildet er einen schraubenförmigen Vorsprung auf der inneren Mantelfläche des äußeren Mantels 1 aus. Die Fließrichtung des Kühlmittels durch den Kühlkanal 3 ist durch Pfeile angedeutet.

In der Variante gemäß Fig. 3b wird der Kühlkanal 3 durch einen schlangenförmigen Kanal 4.2 gebildet. Auch hier ist die Fließrichtung der Kühlflüssigkeit durch den Kühlkanal 3 mit Pfeilen angedeutet. Der schlangenförmige Kanal 4.2 ist hohl ausgeführt, so dass er von der Kühlflüssigkeit durchströmt werden kann. Der schlangenförmige Kanal 4.2 erstreckt sich axial über die Breite des äußeren Mantels 1.

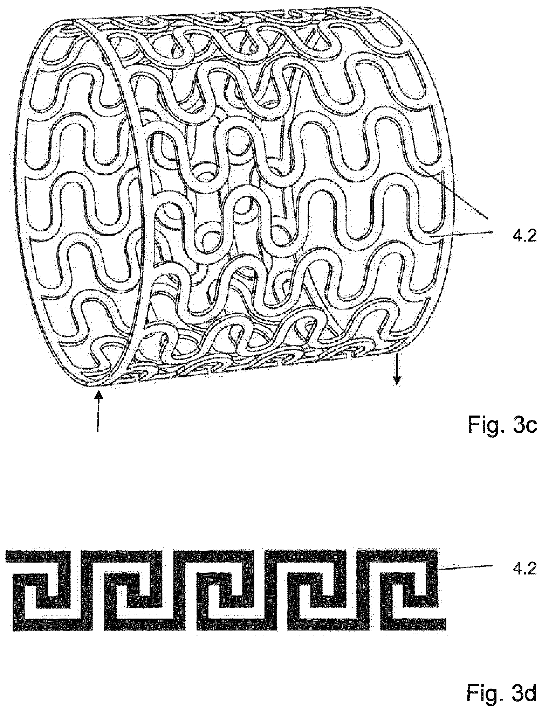

In der Variante gemäß Fig. 3c erstrecken sich die Schlangenlinien eines schlangenförmigen Kanals 4.2 in radialer Richtung des äußeren Mantels 1. Die schlangenförmigen Kanäle 4.2 sind auch hier hohl ausgeführt, so dass sie von der Kühlflüssigkeit durchströmt werden können. Zur Zuführung der Kühlflüssigkeit in die schlangenförmigen Kanäle 4.2 ist ein umlaufender Zulaufkanal und zur Abführung ein umlaufender Ablaufkanal vorgesehen.

In Fig. 3d befindet sich eine Prinzipskizze eines mäanderförmigen Kanals 4.2. Anstelle der Schlangenlinien des Kanals 4.2 gemäß Fig. 3c könnten alternativ auch mäanderförmige Strukturen gemäß Fig. 3d eingesetzt werden.

In den Fig. 4a bis 4d sind verschiedene Möglichkeiten dargestellt, wie die strömungsführenden Strukturen 4 gebildet und mit dem äußeren Mantel 1 verbunden werden können. In der Variante gemäß Fig. 4a werden die strömungsführenden Strukturen 4 durch Stege 4.1 gebildet, wobei die Stege 4.1 gleichzeitig die ersten Dichtungselemente 5.1 darstellen und aus einem elastischen Werkstoff gefertigt sind. Der elastische Werkstoff 4.1, 5.1 ist dabei auf die Mantelfläche des äußeren Mantels 1 aufgesetzt.

In der Variante gemäß Fig. 4b hingegen wurde der elastische Werkstoff 4.1, 5.1 teilweise in den äußeren Mantel 1 eingelassen.

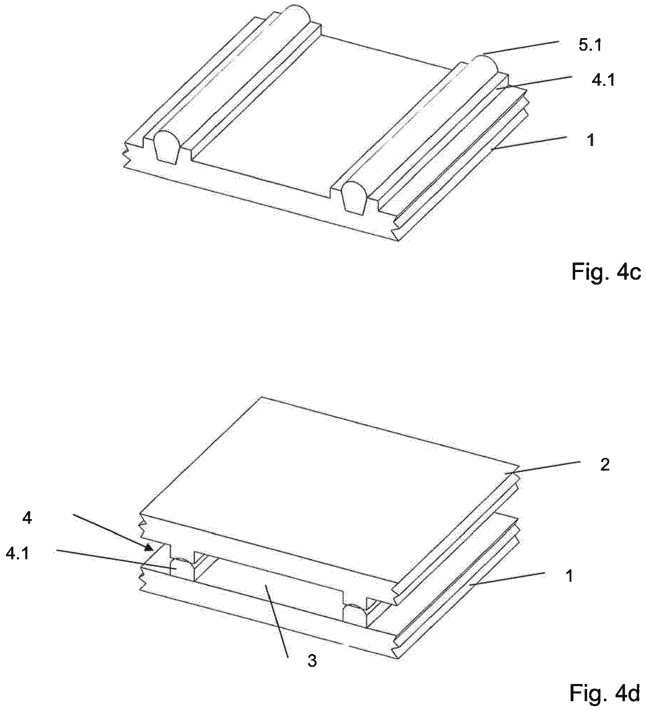

In der Variante gemäß Fig. 4c sind die als Stege 4.1 ausgeführten strömungsführenden Strukturen 4 nur teilweise aus elastischem Werkstoff gefertigt und die ersten Dichtungselemente 5.1 werden von gegenüber der inneren Mantelfläche des äußeren Mantels 1 erhabenen Strukturen eingefasst.

In Fig. 4d ist eine Variante dargestellt, welche mit allen drei zuvor beschriebenen Varianten in den Fig. 4a bis 4c kombiniert werden kann. Die strömungsführenden Strukturen 4 werden dabei nicht allein durch mit dem äußeren Mantel 1 verbundene Stege 4.1 geschaffen, sondern ergeben sich im Zusammenspiel mit Kühlrippen, welche Teil des inneren Mantels 2 sind. Durch das Zusammenwirken der Kühlrippen mit den Stegen 4.1 wird im Spalt zwischen äußerem Mantel 1 und innerem Mantel 2 so ein Kühlkanal 3 ausgebildet.

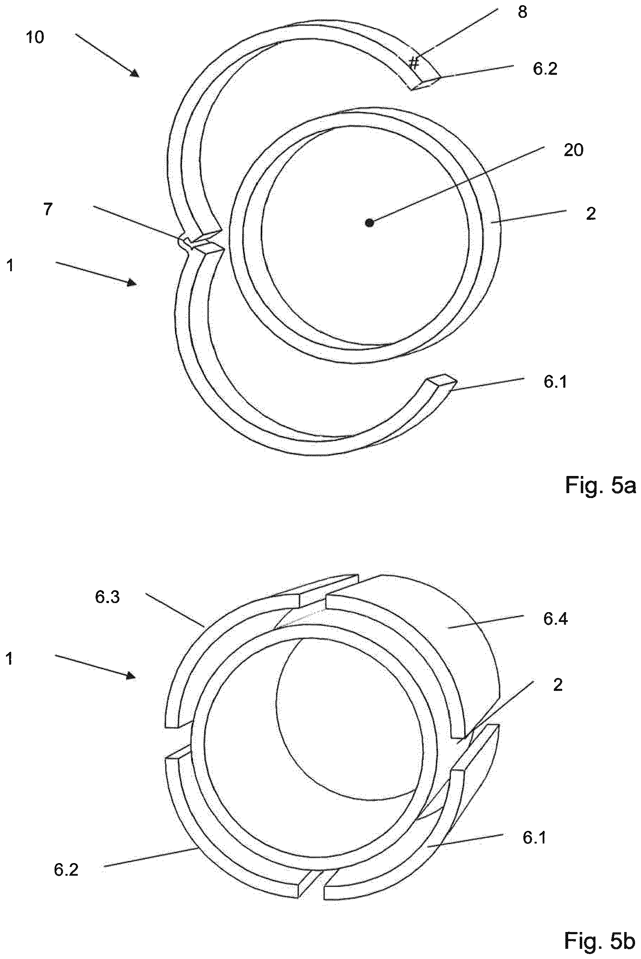

In Fig. 5a ist grob schematisch der Aufbau einer Gehäuseanordnung 10 mit zwei Teilschalen 6.1, 6.2, also mit zwei Halbschalen gezeigt. Die beiden Teilschalen 6.1 und 6.2 bilden gemeinsam den äußeren Mantel 1 und sind an einer Kontaktstelle mit einem Scharnier 7 miteinander verbunden. An der zweiten Kontaktstelle kann ein Verbinden durch Verrasten bzw. Verklipsen, mittels Spannelementen oder durch Verschraubung erreicht werden. Eine elektrische Maschine, welche sich in der Position 20 befindet, wird von einem inneren Mantel 2 umgeben, wobei der innere Mantel 2 aus einem Metall, insbesondere im Aluminium-Druckgussverfahren, gefertigt ist. Radial nach außen angrenzend an den inneren Mantel 2 wird der äußere Mantel 1 aufgebracht, so dass sich zwischen innerem Mantel 2 und äußerem Mantel 1 ein Kühlkanal 3 ausbildet, welcher von einer Kühlflüssigkeit durchströmt werden kann.

Durch die Ausbildung des äußeren Mantels 1 in klappbar miteinander verbundenen Teilschalen 6.1, 6.2 ist eine schnelle und einfache Montage der Gehäuseanordnung 10 möglich.

Um die elektromagnetische Verträglichkeit der Gehäuseanordnung 10 weiter zu verbessern, kann der äußere Mantel 1, welcher aus einem Kunststoff gefertigt ist, mit einer entsprechenden Beschichtung 8 versehen sein.

Alternativ zu der Ausgestaltung mit zwei Teilschalen 6.1, 6.2 kann auch eine größere Anzahl von Segmenten 6 vorgesehen sein. Wie in Fig. 5b dargestellt, wird der äußere Mantel 1 durch vier Teilschalen 6.1, 6.2, 6.3 und 6.4 ausgebildet.

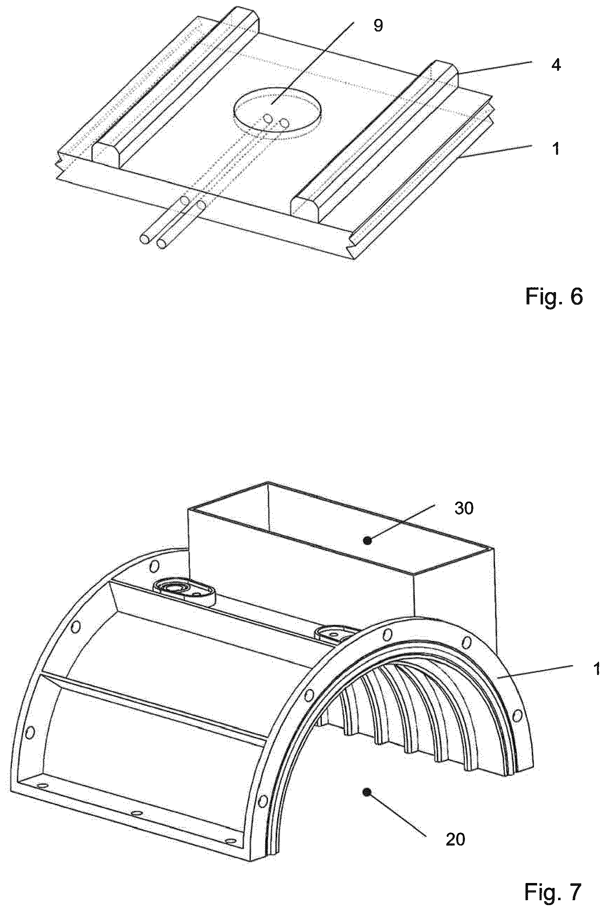

Wie in Fig. 6 angedeutet ist, können Sensorelemente 9 direkt in den äußeren Mantel 1 eingegossen werden. Derartige Sensorelemente 9 können beispielsweise zur Bestimmung von Temperatur, Druck, Strömung und / oder Füllstand in dem Kühlkanal 3 herangezogen werden. Dank der Integration der Sensorelemente 9 in den äußeren Mantel 1 erübrigt sich eine spätere komplizierte Montage sowie eine aufwendige Abdichtung der Sensorelemente 9.

Aus Fig. 7 geht eine Weiterbildung des äußeren Mantels 1 hervor. Der äußere Mantel 1 besitzt eine, hier quaderförmige, Gehäuseerweiterung, welche in der Position 30 zur Aufnahme zusätzlicher Aggregate geeignet ist. Auch die Gehäuseerweiterung kann in dem einen Prozessschritt im Zweikomponenten-Spritzgussverfahren hergestellt sein. Bei dem zusätzlichen Aggregat, welches so von der Gehäuseanordnung 10 aufgenommen werden kann, kann es sich beispielsweise um Getriebeteile oder Leistungselektronik handeln. Auch kann in der Gehäuseerweiterung ein Kühlelement vorgesehen sein, welches dem zusätzlichen Aggregat zugeordnet ist. Das Kühlelement sowie der Kühlkanal 3 der Gehäuseanordnung 10 können von Kühlflüssigkeit durchströmt werden und Teil eines einzigen Kühlsystems sein (nicht dargestellt).

### Bezugszeichenliste

- 1: äußerer Mantel
- 2: innerer Mantel
- 3: Kühlkanal
- 4: Strömungsführende Struktur
- 4.1: Steg
- 4.2: Kanal
- 5: integriertes Dichtungselement
- 5.1: 1. Dichtungselement
- 5.2: 2. Dichtungselement
- 5.3: 3. Dichtungselement
- 5.4: 4. Dichtungselement
- 6: Segment
- 6.1: Teilschale
- 6.2: Teilschale
- 6.3: Teilschale
- 6.4: Teilschale
- 7: Scharnier
- 8: Beschichtung
- 9: Sensorelement

- 10: Gehäuseanordnung
- 20: Position elektrische Maschine
- 30: Position zusätzliches Aggregat

- A: Auslass Kühlkanal
- E: Einlass Kühlkanal

## Patentansprüche

1. Gehäuseanordnung (10) für eine elektrische Maschine (20), insbesondere einen Elektromotor und/oder einen Generator, aufweisend einen inneren (2) und einen äußeren Mantel (1) und mindestens einen dazwischenliegenden Kühlkanal (3) zum Kühlen der elektrischen Maschine, wobei der Kühlkanal (3) zum Transport einer Kühlflüssigkeit ausgebildet ist,
**dadurch gekennzeichnet,**
**dass** der innere Mantel (2) aus Metall, insbesondere aus Aluminiumdruckguß, und der äußere Mantel (1) aus Kunststoff ausgebildet sind.

2. Gehäuseanordnung nach Anspruch 1, **dadurch gekennzeichnet,**
**dass** der äußere Mantel (1) aus einem polymeren Werkstoff ist, insbesondere aus einem Thermoplast, einem Duroplast oder einem polymerbasierten Faserverbundwerkstoff.

3. Gehäuseanordnung nach einem der vorangehenden Ansprüche,
**dadurch gekennzeichnet,**
**dass** der innere Mantel (2) eine ebene, unstrukturierte Außenfläche aufweist.

4. Gehäuseanordnung nach einem der vorangehenden Ansprüche,
**dadurch gekennzeichnet,**
**dass** der äußere Mantel (1) an seiner Innenfläche mit den Kühlkanal (3) bildenden strömungsführenden Strukturen (4) versehen ist.

5. Gehäuseanordnung nach Anspruch 4, **dadurch gekennzeichnet,**
**dass** die strömungsführenden Strukturen (4) als spiralförmiger Steg (4.1), als mäanderförmiger, schlangenförmiger oder axialer Kanal (4.2) ausgebildet sind.

6. Gehäuseanordnung nach einem der vorangehenden Ansprüche,
**dadurch gekennzeichnet,**
**dass** mit dem äußeren Mantel (1) mehrere integrierte Dichtungselemente (5) aus einem elastischen Werkstoff verbunden sind und
**dass** erste Dichtungselemente (5.1) den Kühlkanal (3) gegen den inneren Mantel (2) abdichten.

7. Gehäuseanordnung nach einem der vorangehenden Ansprüche,
**dadurch gekennzeichnet,**
**dass** der äußere Mantel (1) aus mindestens zwei Segmenten (6) aufgebaut ist, wobei die Segmente (6) insbesondere eine gleiche Form besitzen und/oder insbesondere klappbar miteinander verbunden sind.

8. Gehäuseanordnung nach Anspruch 7, **dadurch gekennzeichnet,**
**dass** die Segmente (6) ineinander einrasten, mittels Spannelementen miteinander verspannt oder miteinander verschraubt sind.

9. Gehäuseanordnung nach einem der vorangehenden Ansprüche,
**dadurch gekennzeichnet,**
**dass** der äußere Mantel (1) mit einer elektrisch leitfähigen Beschichtung (8) versehen ist, insbesondere einer Metall-Beschichtung, zur Verbesserung der elektromagnetischen Verträglichkeit.

10. Gehäuseanordnung nach einem der vorangehenden Ansprüche,
**dadurch gekennzeichnet,**
**dass** in Sensordurchführungen in dem äußeren Mantel (1) Sensorelemente (9) integriert sind.

11. Gehäuseanordnung nach einem der Ansprüche 6 bis 10, **dadurch gekennzeichnet,**
**dass** in den äußeren Mantel (1) weitere Dichtungselemente (5) integriert sind, insbesondere
- zweite Dichtungselemente (5.2) zur Abdichtung von einem Einlass (E) und einem Auslass (A) des Kühlkanals (3)
- dritte Dichtungselemente (5.3) zur Abdichtung der Segmente (6) zueinander
- vierte Dichtungselemente (5.4) zur Abdichtung von Sensordurchführungen.

12. Gehäuseanordnung nach einem der Ansprüche 6 bis 11, **dadurch gekennzeichnet,**
**dass** der äußere Mantel (1) und die Dichtungselemente (5) in einem Prozessschritt im 2K-Verfahren hergestellt sind.

13. Gehäuseanordnung nach einem der vorangehenden Ansprüche,
**dadurch gekennzeichnet,**
**dass** der äußere Mantel (1) zur Aufnahme mindestens eines zusätzlichen Aggregats (30) ausgeführt ist.

14. Gehäuseanordnung nach Anspruch 13, **dadurch gekennzeichnet,**
**dass** dem zusätzlichen Aggregat (30) ein mit Kühlflüssigkeit betriebenes Kühlelement zugeordnet ist und dass der Kühlkanal (3) und das Kühlelement Teile eines Kühlsystems sind.

15. Elektrische Maschine (20), insbesondere Elektromotor und/oder Generator, aufweisend eine Gehäuseanordnung (10) nach einem der vorangehenden Ansprüche.
